# EUROPEAN PATENT APPLICATION

(11) **EP 4 485 093 A1**
(43) Date of publication of application: **01.01.2025**
(21) Application number: 23791288.6
(22) Date of filing: 19.04.2023
(51) Int. Cl.: G05B 15/02

(54) **METHOD FOR CONTROLLING IOT DEVICE, AND DEVICE, IOT SYSTEM AND STORAGE MEDIUM**

(30) Priority: 22.04.2022 CN 202210430807
(71) Applicant: Huawei Technologies Co., Ltd., Shenzhen, Guangdong 518129 (CN)
(72) Inventor: WU, Weichun, Shenzhen, Guangdong 518129 (CN); WANG, Ying, Shenzhen, Guangdong 518129 (CN); XU, Tianliang, Shenzhen, Guangdong 518129 (CN)
(74) Representative: Gill Jennings & Every LLP
(86) International application number: PCT/CN2023/089272
(87) International publication number: WO 2023/202633

(57) **Abstract**

An IoT device control method, a control-side device, an IoT device, an IoT system, and a computer-readable storage medium are provided. The method includes: The control-side device obtains a management and control configuration template and function information of IoT devices (S110, S120), where the management and control configuration template includes an initial correspondence between at least one management and control scenario and at least one function configuration, and the function configuration includes a function setting of a managed and controlled function of an IoT device. The control-side device determines an effective management and control configuration based on the management and control configuration template and the function information (S133), where the effective management and control configuration includes an effective correspondence between a management and control scenario and a function configuration, and an effective association relationship between a function configuration and an IoT device. The control-side device distributes the effective management and control configuration to the IoT devices (S140), where the effective management and control configuration indicates that in a specified management and control scenario, an operating status of an IoT device matches a function configuration associated with the IoT device. Safety management and control on each IoT device is enabled in a one-click manner. This improves convenience of a device management and control operation.

## Description

This application claims priority to Chinese Patent Application No. 202210430807.3, filed with the China National Intellectual Property Administration on April 22, 2022 and entitled "IOT DEVICE CONTROL METHOD, DEVICE, IOT SYSTEM, AND STORAGE MEDIUM", which is incorporated herein by reference in its entirety.

### TECHNICAL FIELD

This application relates to the field of software technologies, and in particular, to an IoT device control method, a control-side device, an IoT device, an IoT system, and a computer-readable storage medium.

### BACKGROUND

Promotion of whole-house intelligence brings a large quantity of smart devices in a home, for example, a water heater, an air conditioner, and an electric rice cooker. A user may control the smart devices by using a remote control, a control panel (for example, a whole-house panel), or the like. For a family with an elderly person or a child, the elderly person or the child may perform a misoperation on the remote control, the control panel, or the like out of curiosity, causing a safety risk.

Some smart devices are set with specific safety measures, for example, a child lock, to prevent a misoperation by a child. However, with an increase of smart devices, the devices are usually manufactured by different manufacturers, and are greatly different in safety measures. Even if the devices are manufactured by a same manufacturer, the safety measures are different due to differences of the devices in type, model, and installation position. In view of this, when there are a large quantity of types/quantity of smart devices in the home, safety management and control operations on the devices are complex.

### SUMMARY

Some implementations of this application provide an IoT device control method, a control-side device, an IoT device, an IoT system, and a computer-readable storage medium. The following describes this application from a plurality of aspects. For implementations and beneficial effects of the following plurality of aspects, refer to each other.

According to a first aspect, this application provides an IoT device control method, applied to a system including a terminal-side device, a control-side device, and a plurality of IoT devices. The method includes: The control-side device obtains a management and control configuration template and function information of the IoT devices, where the management and control configuration template includes an initial correspondence between at least one management and control scenario and at least one function configuration, and the function configuration includes a function setting of a managed and controlled function of an IoT device. The control-side device determines an effective management and control configuration based on the management and control configuration template and the function information, where the effective management and control configuration includes an effective correspondence between a management and control scenario and a function configuration, and an effective association relationship between a function configuration and an IoT device. The control-side device distributes the effective management and control configuration to the IoT devices, where the effective management and control configuration indicates that in a specified management and control scenario, an operating status of an IoT device matches a function configuration associated with the IoT device.

In some implementations, that the control-side device determines an effective management and control configuration based on the management and control configuration template and the function information includes: The control-side device determines an initial management and control configuration based on the management and control configuration template and the function information of the IoT devices, where the initial management and control configuration includes the initial correspondence between a management and control scenario and a function configuration, and an initial association relationship between a function configuration and an IoT device. The control-side device sends the initial management and control configuration to the terminal-side device. The terminal-side device receives a user modification operation, and modifies the initial management and control configuration based on the user modification operation, to obtain the effective management and control configuration. The control-side device obtains the effective management and control configuration from the terminal-side device.

In some implementations, the user modification operation is used to modify at least one of the following items in the initial management and control configuration: the initial correspondence, the initial association relationship, and the function configuration.

In some implementations, the control-side device is a cloud server or a central device in a local area network to which the IoT devices belong.

According to a second aspect, this application provides an IoT device control method, applied to a control-side device. The method includes: obtaining a management and control configuration template and function information of a plurality of IoT devices, where the management and control configuration template includes an initial correspondence between at least one management and control scenario and at least one function configuration, and the function configuration includes a function setting of a managed and controlled function of an IoT device; determining an effective management and control configuration based on the management and control configuration template and the function information, where the effective management and control configuration includes an effective correspondence between a management and control scenario and a function configuration, and an effective association relationship between a function configuration and an IoT device; and distributing the effective management and control configuration to the IoT devices, where the effective management and control configuration indicates that in a specified management and control scenario, an operating status of an IoT device matches a function configuration associated with the IoT device.

In some implementations, the determining an effective management and control configuration based on the management and control configuration template and the function information includes: determining an initial management and control configuration based on the management and control configuration template and the function information of the IoT devices, where the initial management and control configuration includes the initial correspondence between a management and control scenario and a function configuration, and an initial association relationship between a function configuration and an IoT device; sending the initial management and control configuration to the terminal-side device; and receiving the effective management and control configuration from the terminal-side device, where the effective management and control configuration is a configuration obtained by modifying at least one of the following items in the initial management and control configuration: the initial correspondence, the initial association relationship, and the function configuration.

According to a third aspect, this application provides an IoT device control method, applied to a system including a terminal-side device, a control-side device, and a plurality of IoT devices. The method includes: The terminal-side device receives a scenario specifying operation from a user, where the scenario specifying operation is used to specify a current management and control scenario. The terminal-side device sends scenario specifying information to the control-side device, where the scenario specifying information indicates the current management and control scenario. The control-side device controls the IoT devices based on the scenario specifying information and a preset effective management and control configuration, where the effective management and control configuration includes an effective correspondence between at least one management and control scenario and at least one function configuration, and an effective association relationship between a function configuration and an IoT device, and the function configuration includes a function setting of a managed and controlled function of an IoT device.

In some implementations, that the control-side device controls the IoT devices based on the scenario specifying information and a preset effective management and control configuration includes: The control-side device determines the current management and control scenario from the at least one management and control scenario based on the scenario specifying information. The control-side device receives a remote control instruction used to control an IoT device. The control-side device determines whether the remote control instruction matches a function configuration corresponding to the current management and control scenario, and if the remote control instruction matches the function configuration corresponding to the current management and control scenario, the remote control instruction is sent to the IoT device, or if the remote control instruction does not match the function configuration corresponding to the current management and control scenario, the remote control instruction is ignored.

In some implementations, an effective management and control configuration distributed to the IoT devices is preset in the IoT device; and that the control-side device controls the IoT devices based on the scenario specifying information and a preset effective management and control configuration includes: The control-side device sends the scenario specifying information to an associated IoT device, where the associated IoT device is an IoT device associated with the current management and control scenario. The associated IoT device operates based on a function configuration corresponding to the current management and control scenario.

In some implementations, that the associated IoT device operates based on a function configuration corresponding to the current management and control scenario includes: The associated IoT device determines the current management and control scenario from the at least one management and control scenario based on the scenario indication information. The associated IoT device receives a local control instruction used to control an IoT device. The associated IoT device determines whether the local control instruction matches the function configuration corresponding to the current management and control scenario, and if the local control instruction matches the function configuration corresponding to the current management and control scenario, an action corresponding to the local control instruction is performed, or if the local control instruction does not match the function configuration corresponding to the current management and control scenario, the local control instruction is ignored.

In some implementations, the scenario specifying operation is a fingerprint input operation, a gesture input operation, an image input operation, or a character input operation that is performed on a lock screen of the terminal-side device.

According to a fourth aspect, this application provides an IoT device control method, applied to a control-side device. The method includes: receiving scenario specifying information from a terminal-side device, where the scenario specifying information indicates a current management and control scenario; and controlling an IoT device based on the scenario specifying information and a preset effective management and control configuration, where the effective management and control configuration includes an effective correspondence between at least one management and control scenario and at least one function configuration, and an effective association relationship between a function configuration and an IoT device, and the function configuration includes a function setting of a managed and controlled function of an IoT device.

In some implementations, the controlling an IoT device based on the scenario specifying information and a preset effective management and control configuration includes: determining the current management and control scenario from the at least one management and control scenario based on the scenario specifying information; receiving a remote control instruction used to control an IoT device; and determining whether the control instruction matches a function configuration corresponding to the current management and control scenario, and if the control instruction matches the function configuration corresponding to the current management and control scenario, sending the remote control instruction to the IoT device, or if the control instruction does not match the function configuration corresponding to the current management and control scenario, ignoring the remote control instruction.

According to a fifth aspect, this application provides an IoT device control method, applied to an IoT device, where an effective management and control configuration distributed to the IoT device is preset in the IoT device; and the effective management and control configuration includes an effective correspondence between at least one management and control scenario and at least one function configuration, and an effective association relationship between a function configuration and an IoT device, and the function configuration includes a function setting of a managed and controlled function of an IoT device. The method includes: receiving scenario specifying information from a control-side device, where the scenario specifying information indicates a current management and control scenario; determining the current management and control scenario from the at least one management and control scenario based on the scenario indication information; receiving a local control instruction used to control an IoT device; and determining whether the local control instruction matches a function configuration corresponding to the current management and control scenario, and if the local control instruction matches the function configuration corresponding to the current management and control scenario, performing an action corresponding to the local control instruction, or if the local control instruction does not match the function configuration corresponding to the current management and control scenario, ignoring the local control instruction.

According to a sixth aspect, an implementation of this application provides a control-side device, including: a memory, configured to store instructions executed by one or more processors of the control-side device; and a processor, where when the processor executes the instructions in the memory, the control-side device is enabled to perform the method provided in any implementation of the second aspect of this application, or perform the method provided in any implementation of the fourth aspect of this application. For beneficial effects that can be achieved in the sixth aspect, refer to beneficial effects of any implementation of the second aspect of this application or beneficial effects of any implementation of the fourth aspect of this application. Details are not described herein again.

According to a seventh aspect, an implementation of this application provides an IoT device, including: a memory, configured to store instructions executed by one or more processors of the IoT device; and a processor, where when the processor executes the instructions in the memory, the IoT device is enabled to perform the method provided in any implementation of the fifth aspect of this application. For beneficial effects that can be achieved in the seventh aspect, refer to beneficial effects of any implementation of the fifth aspect of this application. Details are not described herein again.

According to an eighth aspect, an implementation of this application provides a computer-readable storage medium. The computer-readable storage medium stores instructions. When the instructions are executed on a computer, the computer is enabled to perform the method provided in any implementation of the first aspect, any implementation of the second aspect, any implementation of the third aspect, any implementation of the fourth aspect, or any implementation of the fifth aspect of this application. For beneficial effects that can be achieved in the eighth aspect, refer to beneficial effects of any implementation of the first aspect, any implementation of the second aspect, any implementation of the third aspect, any implementation of the fourth aspect, or any implementation of the fifth aspect of this application. Details are not described herein again.

### BRIEF DESCRIPTION OF DRAWINGS

FIG. 1 shows an example application scenario according to an implementation of this application;
FIG. 2 shows device safety management and control measures in some embodiments;
FIG. 3 is a diagram of an example architecture of an IoT system according to an embodiment of this application;
FIG. 4 is an example flowchart 1 of an IoT device control method according to an embodiment of this application;
FIG. 5 is an example flowchart 2 of an IoT device control method according to an embodiment of this application;
FIG. 6 is a diagram of a management and control configuration template according to an embodiment of this application;
FIG. 7 is a diagram of an initial management and control configuration according to an embodiment of this application;
FIG. 8A to FIG. 8F are diagrams of a device management and control interface according to an embodiment of this application;
FIG. 9 is a diagram of an effective management and control configuration according to an embodiment of this application;
FIG. 10 is an example flowchart 3 of an IoT device control method according to an embodiment of this application;
FIG. 11A to FIG. 11C are diagrams of a scenario specifying interface according to an embodiment of this application;
FIG. 12 is an example flowchart 4 of an IoT device control method according to an embodiment of this application;
FIG. 13 is an example flowchart 5 of an IoT device control method according to an embodiment of this application;
FIG. 14 is a diagram of device modules of an IoT system according to an embodiment of this application;
FIG. 15 is a block diagram of an electronic device according to an implementation of this application; and
FIG. 16 is a diagram of a structure of a system on chip (System on Chip, SOC) according to an implementation of this application.

### DESCRIPTION OF EMBODIMENTS

The following describes specific implementations of this application in detail with reference to accompanying drawings.

An implementation of this application is used to provide an internet of things (Internet of Things, IoT) device control method. In this application, safety management and control on IoT devices can be implemented in batches, to improve operation convenience and help ensure user safety.

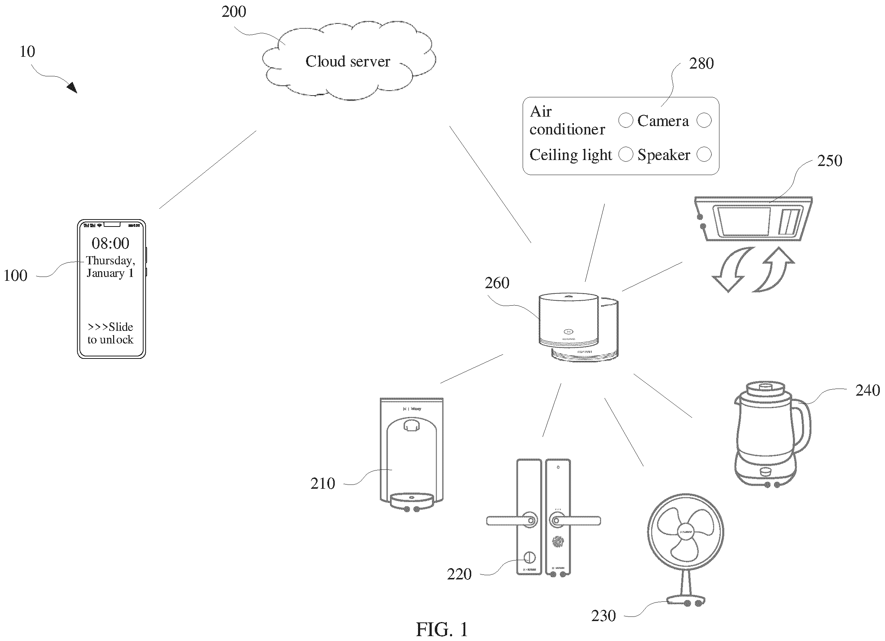

FIG. 1 shows an example application scenario according to an embodiment of this application, which is specifically a smart home scenario. A smart home system 10 (as an example of an IoT system) is included in FIG. 1. The smart home system 10 includes a mobile phone 100 (as an example of a terminal-side device), a cloud server 200 (for example, IoT home cloud, as an example of a control-side device), and a plurality of smart devices (or referred to as "smart home devices", as an example of IoT devices). The smart devices include a water dispenser 210, a door lock 220, a fan 230, a kettle 240, and an air conditioner 250. It should be noted that the smart devices in FIG. 1 are merely examples. The smart home system 10 may further include other devices, for example, a water heater, a coffee machine, an electric cooker, and a heater that are not shown one by one.

The smart devices and a home gateway 260 may form a home local area network (as an example of a local area network to which the IoT devices belong). The home gateway 260 may be a central device of the home local area network, and each smart device is in a communication connection with the cloud server 200 by using the home gateway 260. A manner of connection between the smart devices and the home gateway 260 may be a wired manner (for example, a network cable connection or a power line connection), or may be a wireless manner (for example, a Wi-Fi connection). In another embodiment, the smart devices may alternatively be directly connected to the cloud server 200 (that is, communication between the smart devices and the cloud server 200 does not pass through the home gateway 260). For example, when the smart devices have a cellular communication function, the smart devices may be in a direct communication connection with the cloud server 200.

The mobile phone 100 is in a communication connection with the cloud server 200. The mobile phone 100 may be further in a communication connection with the home gateway 260 and the smart devices. For example, when the mobile phone 100 is at home, the mobile phone 100 may be connected to the home gateway 260 through Wi-Fi, and connected to the smart devices through Bluetooth, Wi-Fi, NFC, or the like.

The smart devices have different functions. For example, the water dispenser has a water outlet function, and the fan and the air conditioner have an air outlet function. A user may perform local control on the smart devices, for example, control the smart devices by using user interfaces of the smart devices. The user interfaces of the smart devices are, for example, buttons or operation panels on bodies of the smart devices, or remote controls used with the smart devices. The user may further perform remote control on the smart devices, for example, control the smart devices by using a control apparatus like a central control panel 280 or the mobile phone 100.

As described in the background, for a family with an elderly person or a child, the smart devices may be misoperated, causing a safety risk. To protect user safety, specific safety measures are taken for some of the smart devices.

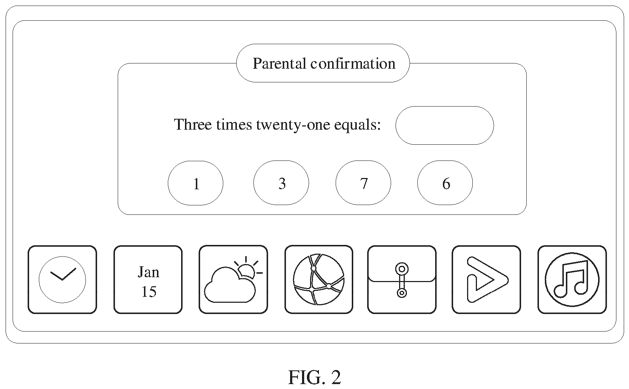

FIG. 2 shows safety measures in some embodiments. A smart device includes a software child lock. When the user operates the smart device, a child lock token shown in FIG. 2 is displayed on an operation panel. The user can perform a normal operation on the smart device only after inputting a correct answer. This setting can prevent young children from misoperating the smart device.

In some other embodiments, a hardware child lock (for example, a physical switch or a knob) may alternatively be disposed on the smart device. When the hardware child lock is in a locked state, a control function of the smart device is disabled, to prevent a misoperation of a child.

However, a child lock apparatus (including a hardware child lock or a software child lock) is generally based on a single device. That is, the child lock apparatus can take effect only on a single device. Therefore, safety measures of each device need to be operated one by one, and an operation process is complex. In addition, for a home with whole-house intelligence, there are a large quantity of types/quantity of smart devices, and there are various child lock setting manners, resulting in poor operation consistency experience.

In addition, a child lock apparatus (for example, a hardware child lock) on some devices is easy to crack, and has a weak actual protection capability for a child. In addition, due to a limitation of manufacturing costs and the like, some smart devices (for example, a microwave oven, an electric cooker, and an air conditioner) are not provided with a child lock. However, these devices also have safety risks to the child and the elderly person.

Therefore, an embodiment of this application provides an IoT device control method, so that safety management and control settings can be performed on IoT devices in batches. In this way, user operations may be simplified, and use safety of the IoT devices may be ensured.

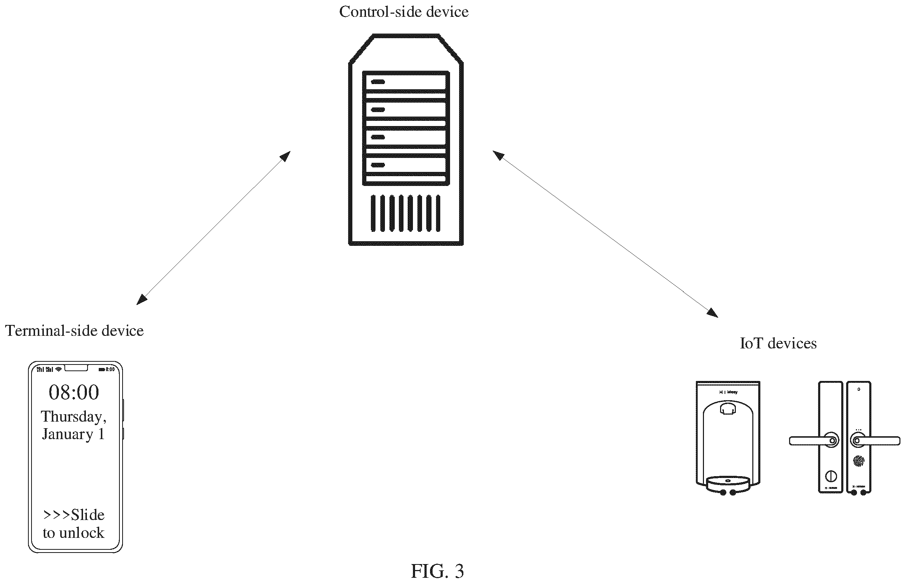

FIG. 3 is a system architecture according to an implementation of this application. With reference to FIG. 3, an IoT system provided in an implementation of this application includes a terminal-side device (for example, the mobile phone 100), a control-side device (for example, the cloud server 200 and the home gateway 260), and IoT devices (for example, the smart home devices).

The control-side device is configured to generate an effective management and control configuration. The effective management and control configuration includes a correspondence between several management and control scenarios and several function configurations, and an association relationship between a function configurations and an IoT device. After generating the effective management and control configuration, the control-side device distributes the effective management and control configuration to the IoT devices.

Then, a user may specify a current management and control scenario on the terminal-side device. After the user specifies the scenario, the terminal-side device sends scenario specifying information to the control-side device. Then, the control-side device may control the IoT devices based on the current management and control scenario, to enable an operating status of an IoT device to match a function configuration corresponding to the current management and control scenario.

In other words, in this application, the user only needs to specify the current management and control scenario on the terminal device, to enable all IoT devices associated with the current management and control scenario (referred to as "associated IoT devices") to enter a management and control state. This may significantly simplify an operation procedure. In addition, this application is applicable to a parental control mode (that is, a parent specifies the current management and control scenario on the terminal-side device). Compared with the manner shown in FIG. 2, the management and control manner provided in this application is difficult to crack, so that device safety can be provided.

It should be noted that although the smart home devices are used as an example of the IoT devices in FIG. 1, this application is not limited thereto. In another embodiment, the IoT devices may be devices such as an office device (for example, a projector, a printer, or a mouse), an urban public facility (for example, a road surveillance camera or a firefighting device), a factory assembly line device (for example, various position sensors or a drive motor), or a building construction device (for example, a winch or an electric welding machine). Details are not described herein again.

Although the mobile phone 100 is used as an example of the terminal-side device in FIG. 1, this application is not limited thereto. In another embodiment, the terminal-side device may be a device like a tablet, a notebook computer, a wearable device, or a large-screen device that can interact with the user.

Although the cloud server 200 is used as an example of the control-side device in FIG. 1, this application is not limited thereto. In another embodiment, the control-side device may be a device like the home gateway 260, a router, a smart box, or a computer that has a computing and communication function. In addition, the cloud server 200 may be a centralized server or a distributed server.

The following describes specific embodiments of this application by using the scenario shown in FIG. 1 as an example. That is, in the following descriptions, the smart home devices are used as an example of the IoT devices, the mobile phone 100 is used as an example of the terminal-side device, and the cloud server 200 (briefly referred to as the "server 200") is used as an example of the control-side device. However, it may be understood that this application is not limited thereto.

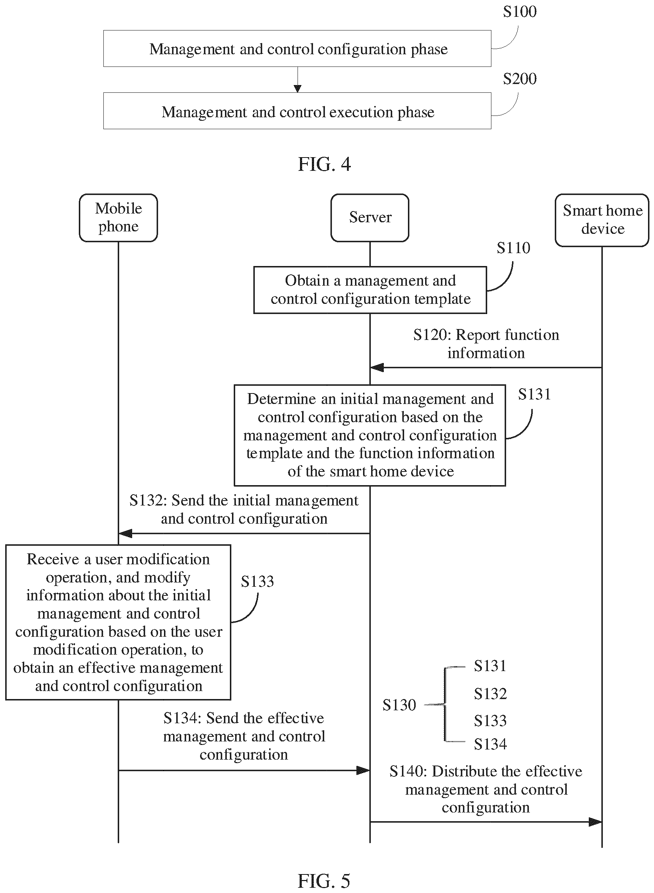

FIG. 4 shows two phases of an IoT device control method according to this embodiment. With reference to FIG. 4, the IoT device control method provided in this embodiment includes a management and control configuration phase S 100 and a management and control execution phase S200. In the management and control configuration phase 100, the server 200 generates an effective management and control configuration, and distributes the effective management and control configuration to each smart device. In the management and control execution phase S200, the mobile phone 100 sends scenario specifying information to the server 200 based on a scenario specifying operation of a user. After receiving the scenario specifying information, the server 200 controls the smart devices to operate based on the effective management and control configuration. The following provides a specific description.

With reference to FIG. 5, the management and control configuration phase S 100 provided in this embodiment includes the following steps.

S 110: The server 200 obtains a management and control configuration template. A manner in which the server 200 obtains the management and control configuration template is not limited in embodiments. For example, after determining the management and control configuration template, a provider of a whole-house intelligence solution uploads the management and control configuration template to the server 200, to enable the server 200 to obtain the management and control configuration template; or the server 200 downloads the management and control configuration template from another device.

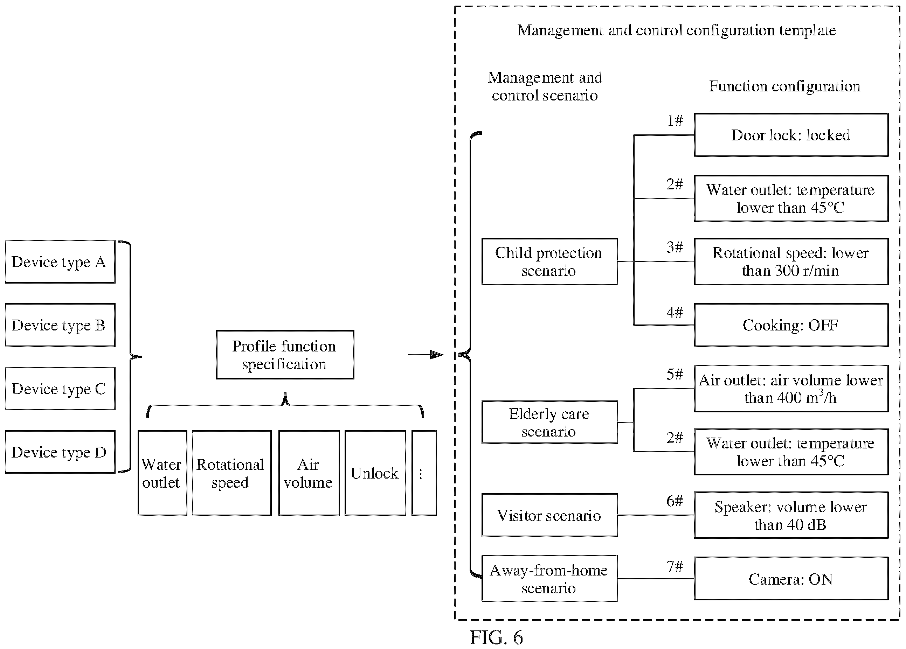

FIG. 6 shows an example of the management and control configuration template. With reference to FIG. 6, the management and control configuration template includes an initial correspondence between several management and control scenarios and several function configurations, where a management and control scenario and a function configuration that are connected by a solid line correspond to each other. In FIG. 6, there are four management and control scenarios: a child protection scenario, an elderly care scenario, a visitor scenario, and an away-from-home scenario. In another embodiment, there may be another quantity of management and control scenarios, for example, 1, 2, or 6.

Each management and control scenario corresponds to one or more function configurations. The function configuration includes a function setting of a managed and controlled function of a smart device. For example, a function configuration 1# is used to set a door lock function to a locked state; and a function configuration 5# is used to set an air outlet volume of an air outlet function to below 400 m³/h. In addition, different scenarios may correspond to a same function configuration. For example, both the "Child protection scenario" and the "Elderly care scenario" may correspond to a function configuration 2# (a configuration for setting a water outlet temperature of a water outlet function to below 45°C).

For example, with reference to FIG. 6, the provider of the whole-house intelligence solution may determine the management and control configuration template according to a predefined smart home device profile function specification. Functions of smart home devices of different types may be defined in the profile function specification. For example, an air conditioner has an air outlet function and a cooling function. Based on the types of the smart home devices, the functions of the smart home devices may be summarized, and managed and controlled functions are matched with management and control scenarios, to determine the management and control configuration template.

In addition, an expression manner of each piece of configuration data (for example, the management and control configuration template) is not limited in embodiments, and may be a table manner, a database manner, a programming language manner (for example, a JSON format), or the like.

S 120: The server 200 receives function information reported by the smart devices.

The smart devices store the function information of the smart devices. For example, before delivery of the smart devices, manufacturers of the smart devices may write the function information of the smart devices into embedded chips of the smart devices. The function information of the smart devices may be described in an agreed manner, for example, a manner defined in the foregoing profile function specification. In addition, one device may have a plurality of functions. For example, the air conditioner has both the air outlet function and the cooling function.

After being connected to the smart home system 10, the smart devices report the function information of the smart devices to the server 200, to enable the server 200 to obtain the function information of the smart devices. In this way, each time a new smart device is connected, the server 200 may obtain function information of the new smart device, so that the smart device can be automatically added to a management and control range.

For example, the server 200 may store the function information of the smart devices in an account corresponding to the smart home system 10 (referred to as an "account A" below, and used as an identifier of the smart home system 10 in the server 200, for example, a Huawei account of the user of the smart devices), to facilitate information management.

A manner in which the smart devices report the function information to the server 200 is not limited in embodiments. The following describes examples.

Example 1: The smart devices report the function information to the server 200 by using the mobile phone 100. After purchasing a new smart device, the user establishes a communication connection between the mobile phone 100 and the smart device. Then, the smart device sends function information of the smart device to the mobile phone 100, and the mobile phone 100 forwards the function information to the server 200. For example, when sending the function information of the smart device to the server 200, the mobile phone 100 may carry account information of the account A.

Example 2: The smart devices report the function information to the server 200 by using the home gateway 260. After purchasing a new smart device, the user establishes a communication connection (for example, a Wi-Fi connection) between the smart device and the home gateway 260, to enable the smart device to access the home local area network. Then, the smart device sends function information of the smart device to the home gateway 260, and the home gateway 260 forwards the function information to the server 200. Similarly, when sending the function information of the smart device to the server 200, the home gateway 260 may also carry account information of the account A.

Example 3: The smart devices directly report the function information to the server 200. After purchasing a new smart device, the user inputs account information of the account A in the device. Then, the smart device sends function information of the smart device to the server 200 together with the account information of the account A, to enable the server 200 to receive the function information of the smart device.

S130: The server 200 determines an effective management and control configuration based on the management and control configuration template and the function information reported by the smart devices. In this embodiment, the effective management and control configuration includes a correspondence between a management and control scenario and a function configuration, and further includes an association relationship between a function configuration and a smart device. The following describes a method for determining the effective management and control configuration.

With reference to FIG. 5, the method for determining the effective management and control configuration provided in this embodiment includes the following steps.

S131: The server 200 determines an initial management and control configuration based on the function information reported by the smart devices, where the initial management and control configuration includes the initial correspondence between a management and control scenario and a function configuration (that is, the correspondence determined in the management and control configuration template), and further includes an initial association relationship between a function configuration and a smart device.

The server 200 may determine the initial association relationship between a function configuration and a smart device based on the function configurations in the management and control configuration template and the function information of the smart devices. Specifically, after receiving function information reported by a smart device, the server 200 matches a function of the smart device with a managed and controlled function set in a function configuration. When a specific function of the smart device matches (for example, is consistent with) the managed and controlled function set in the function configuration, an initial association relationship is established between the smart device and the function configuration.

The air conditioner is used as an example. The server 200 may determine, based on function information reported by the air conditioner, that the air conditioner has an "air outlet" function and a "cooling" function. On this basis, the server 200 may determine that the function of the air conditioner is consistent with a managed and controlled function set in the function configuration 5# in FIG. 6, and therefore establish an initial association relationship between the air conditioner and the function configuration 5#.

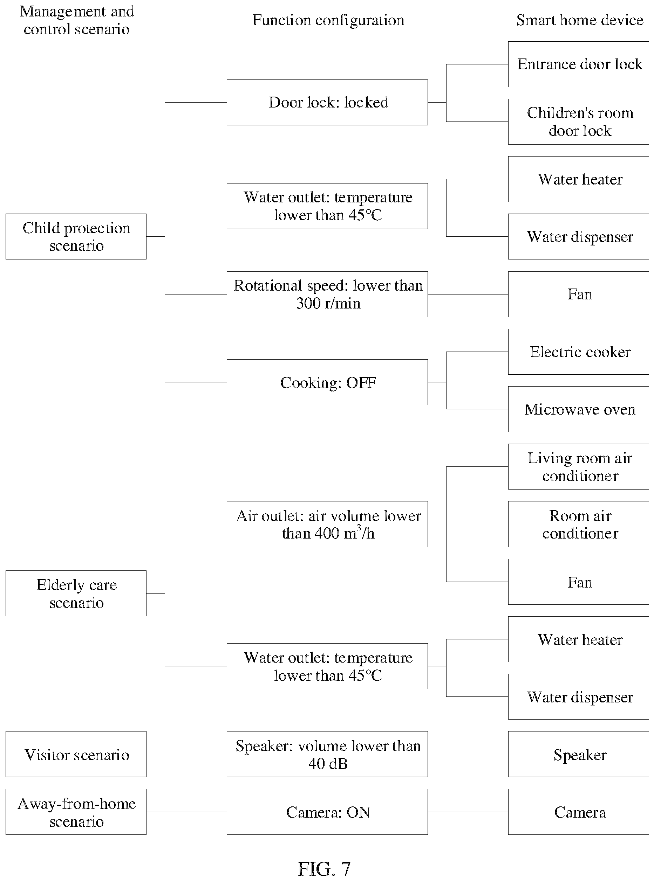

After determining the initial association relationship between a function configuration and a smart device, the server 200 may determine the initial management and control configuration. FIG. 7 shows a diagram of the initial management and control configuration. In FIG. 7, a management and control scenario and a function configuration that are connected by a solid line correspond to each other, and a function configuration and a smart device that are connected by a solid line are associated with each other.

S132: The server 200 sends the initial management and control configuration to the mobile phone 100.

After the server 200 sends the initial management and control configuration to the mobile phone 100, the mobile phone 100 may display the initial management and control configuration, so that the user can view the initial management and control configuration.

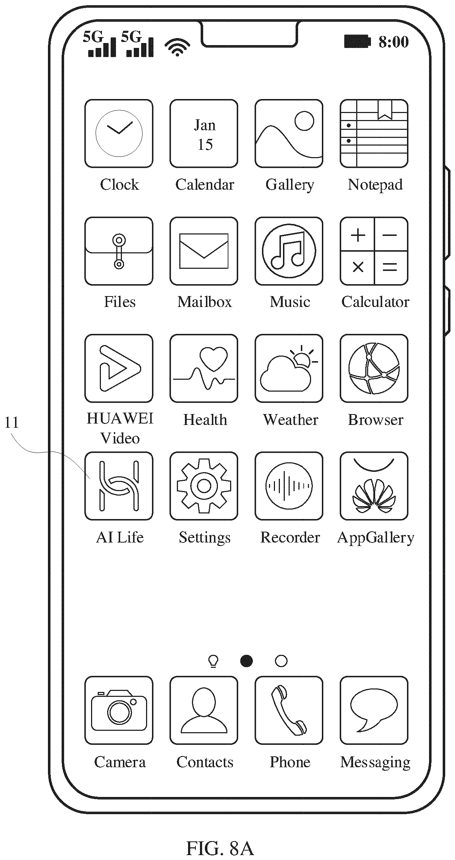

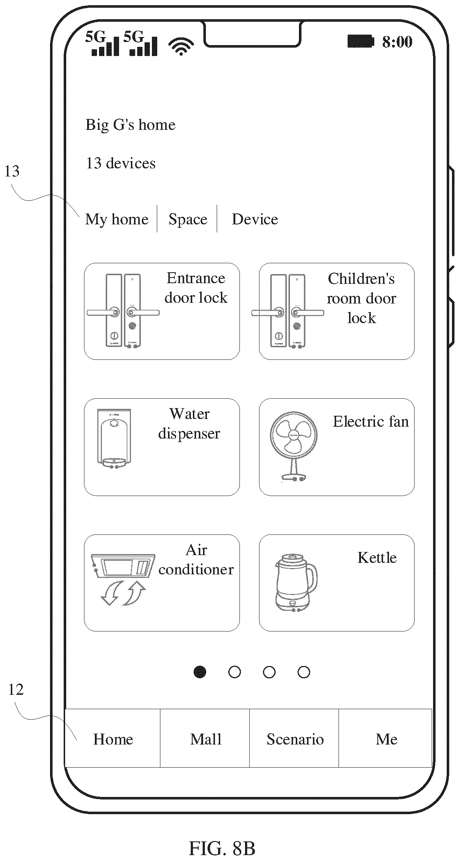

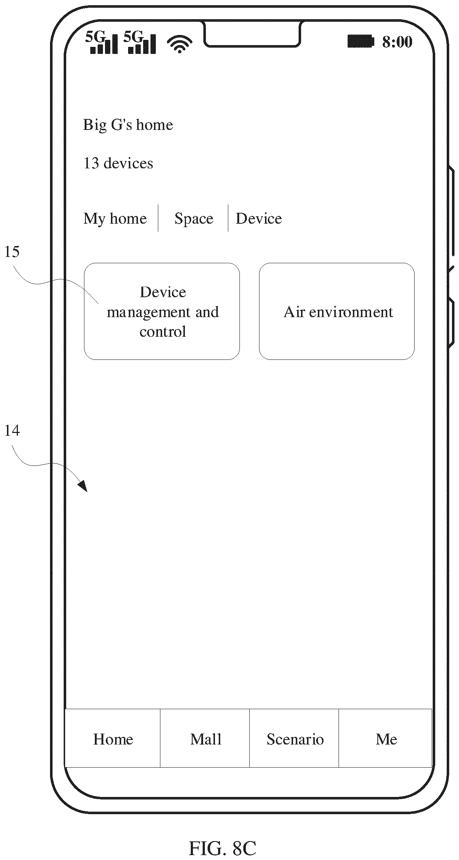

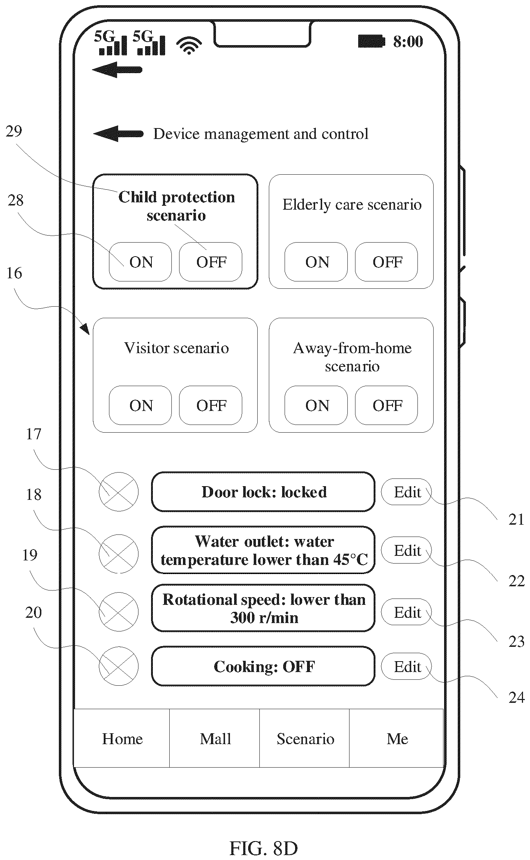

In this embodiment, the mobile phone 100 displays the initial management and control configuration in a graphical form. FIG. 8A to FIG. 8D show an example of a display manner of the initial management and control configuration. With reference to FIG. 8A to FIG. 8D, the user may view the initial management and control configuration in a device management application (for example, "AI Life") of the mobile phone 100. Specifically, the user sequentially taps an "AI Life" icon 11 in FIG. 8A, and a "Home" tab 12 and a "My home" tag 13 in FIG. 8B, to enter an interface 14 shown in FIG. 8C. After the user taps a "Device management and control" button 15 on the interface 14, the mobile phone 100 may display a scenario specifying interface 16 shown in FIG. 8D.

The four management and control scenarios defined in the initial management and control configuration (namely, the four management and control scenarios shown in FIG. 7) are displayed in FIG. 8D. After the user taps one of the scenarios, the mobile phone 100 may display a function configuration corresponding to the scenario. For example, with reference to FIG. 8D, after the user taps the "Child protection scenario", the mobile phone 100 displays function configurations corresponding to the child protection scenario, where the function configurations specifically include a door lock, water outlet, a rotational speed, and cooking.

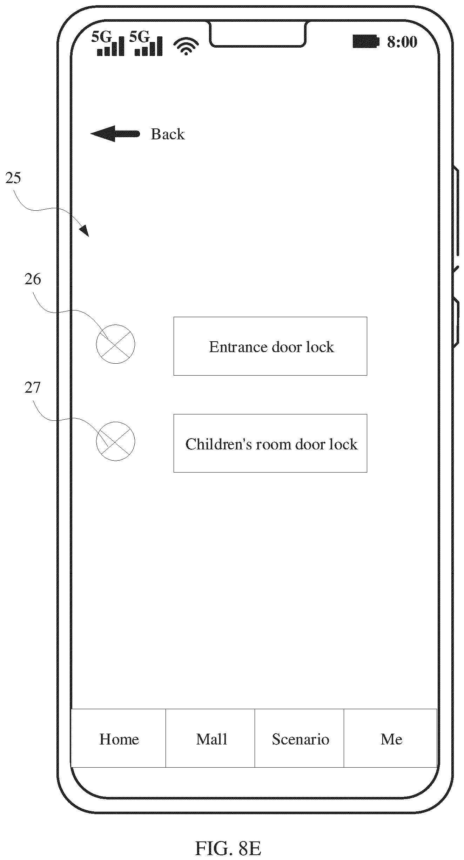

Further, after the user taps a management and control configuration, the mobile phone 100 may display a smart device associated with the management and control configuration. For example, after the user taps a "Door lock: locked" button in FIG. 8D, the mobile phone 100 displays a device interface shown in FIG. 8E. With reference to FIG. 8E, the door lock function has two associated smart devices: an entrance door lock and a children's room door lock.

S133: The mobile phone 100 receives a user modification operation, and modifies the initial management and control configuration based on the user modification operation, to obtain the effective management and control configuration.

In this embodiment, the user modification operation is used to modify at least one of the following items in the initial management and control configuration: the initial correspondence between a management and control scenario and a function configuration; the initial association relationship between a function configuration and a smart device; and a parameter setting in a function configuration. The following describes an example with reference to FIG. 8D and FIG. 8E.

The user can modify the initial correspondence between a management and control scenario and a function configuration. With reference to FIG. 8D, the interface 16 further includes a plurality of delete buttons 17, 18, 19, and 20. The plurality of delete buttons are in a one-to-one correspondence with the plurality of function configurations. For example, the delete button 17 corresponds to the function configuration "Door lock: locked". After tapping a delete button, the user may delete (as an example of modification) a function configuration corresponding to the delete button. For example, after tapping the delete button 20, the user may delete a correspondence between the "Child protection scenario" and the function configuration "Cooking".

The user may also modify a parameter setting in a function configuration. Still with reference to FIG. 8D, the interface 16 further includes a plurality of edit buttons 21, 22, 23, and 24, and the plurality of edit buttons are in a one-to-one correspondence with the plurality of function configurations. After tapping an edit button, the user may modify a corresponding function configuration. After the function configuration is modified, the modification takes effect on all smart devices associated with the function configuration.

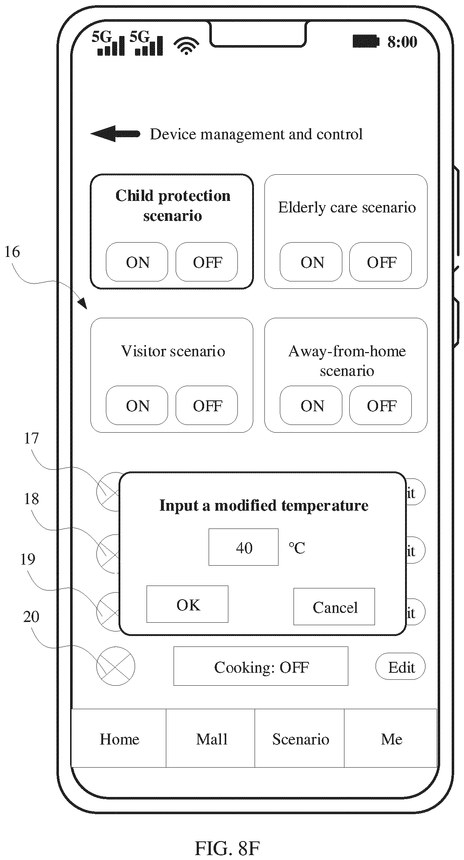

For example, after the user taps a button "Water outlet: water temperature lower than 45°C", an electronic device may pop up a text box shown in FIG. 8F. The user may input a modified parameter (for example, 40) in the text box, and tap an "OK" button, to modify the function configuration "Water outlet" in the "Child protection scenario" to be that the water temperature does not exceed 40°C.

With reference to FIG. 8E, the user may further modify the initial association relationship between a management and control configuration and a smart device. With reference to FIG. 8E, an interface 25 further includes two delete buttons 26 and 27, and the two delete buttons are in a one-to-one correspondence with two smart devices. For example, the delete button 26 corresponds to the entrance door lock. After tapping a delete button, the user may delete (as an example of modification) a smart device corresponding to the delete button. For example, after tapping the delete button 27, the user may delete an association relationship between the function configuration "Door lock" and the "Children's room door lock" in the "Child protection scenario".

In this embodiment, the user modification operation includes deleting the correspondence between the "Child protection scenario" and the function configuration "Cooking", and modifying the function configuration "Water outlet" in the "Child protection scenario" to be that the water temperature does not exceed 40°C. After receiving the user modification operation, the mobile phone 100 correspondingly modifies the initial management and control configuration, to obtain the effective management and control configuration.

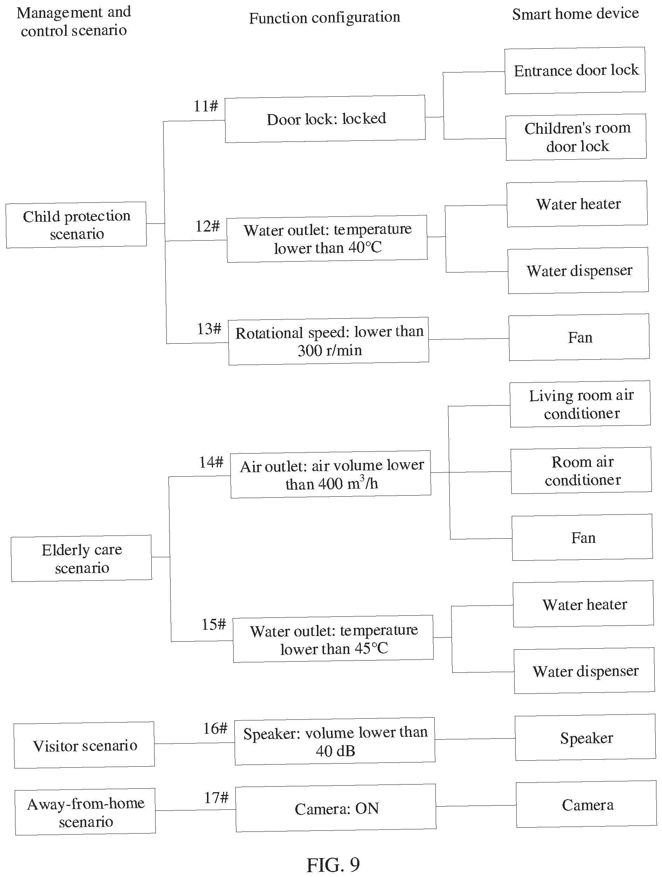

FIG. 9 shows a diagram of the effective management and control configuration. The effective management and control configuration includes an effective correspondence between a management and control scenario and a function configuration, and an effective association relationship between a function configuration and a smart device. In FIG. 9, a management and control scenario and a function configuration that are connected by a solid line correspond to each other, and a function configuration and a smart device that are connected by a solid line are associated with each other.

S 134: The server 200 obtains the effective management and control configuration from the mobile phone 100. That is, the mobile phone 100 sends the effective management and control configuration to the server 200, to enable the server 200 to obtain the effective management and control configuration. For example, after receiving the effective management and control configuration, the server 200 stores the effective management and control configuration in an account corresponding to the smart home system 10.

The server 200 may determine the effective management and control configuration by using steps S131 to S134. It should be noted that, the foregoing steps are an example manner in which the server 200 determines the effective management and control configuration, and a person skilled in the art may make other variations. For example, in another embodiment, a process in which the server 200 determines the effective management and control configuration may not include steps S133 and S134, but the initial management and control configuration determined in step S131 is directly used as the effective management and control configuration. In this embodiment, the initial correspondence that is determined in step S110 between a management and control scenario and a function configuration is an effective correspondence between a management and control scenario and a function configuration, and the initial association relationship that is determined in step S131 between a function configuration and a smart device is an effective association relationship between a function configuration and a smart device.

After determining the effective management and control configuration, the server 200 performs step S140 in FIG. 5, to distribute the effective management and control configuration to each smart device.

S140: The server 200 distributes the effective management and control configuration to the smart devices.

That the server 200 distributes the effective management and control configuration to the smart devices means that the server 200 sends, to the smart devices, at least a part that is of the effective management and control configuration and that is associated with the smart devices. On this basis, information sent by the server 200 to the smart devices is not limited in this application. For example, the server 200 may send all information in the effective management and control configuration to the smart devices.

With reference to FIG. 9, a water heater is used as an example. A part that is of the effective management and control configuration and that is associated with the water heater includes a correspondence between the "Child protection scenario" and a function configuration 12# ("Water outlet: temperature lower than 40°C"), and a correspondence between the "Elderly care scenario" and a function configuration 15# ("Water outlet: temperature lower than 45°C").

The effective management and control configuration indicates that in a specified management and control scenario (for example, a "current management and control scenario" below), an operating status of a smart device matches a function configuration associated with the smart device. For example, in the child protection scenario, an operating status of the entrance door lock matches an operating parameter set in a function configuration 11# ("Door lock: locked") (that is, the entrance door lock remains in a locked state). For another example, in the "Elderly care scenario", an operating status of a living room air conditioner matches an operating parameter set in a function configuration 14# ("Air outlet: air volume lower than 400 m³/h") (that is, a maximum air outlet volume of the living room air conditioner does not exceed 400 m³/h). For a more detailed function of the effective management and control configuration, refer to the following descriptions of the management and control execution phase S200.

A manner in which the server 200 distributes the effective management and control configuration to the smart devices is not limited in embodiments. For example, the server 200 may distribute the effective management and control configuration to the smart devices by using the home gateway 260, or may directly distribute the effective management and control configuration to the smart devices.

The management and control configuration phase S 100 is described above. With reference to FIG. 4, after the management and control configuration phase S 100, the IoT device control method provided in this embodiment further includes the management and control execution phase S200. In the management and control execution phase S200, the user can perform a safety management and control operation on the smart devices in batches. The following provides a specific description.

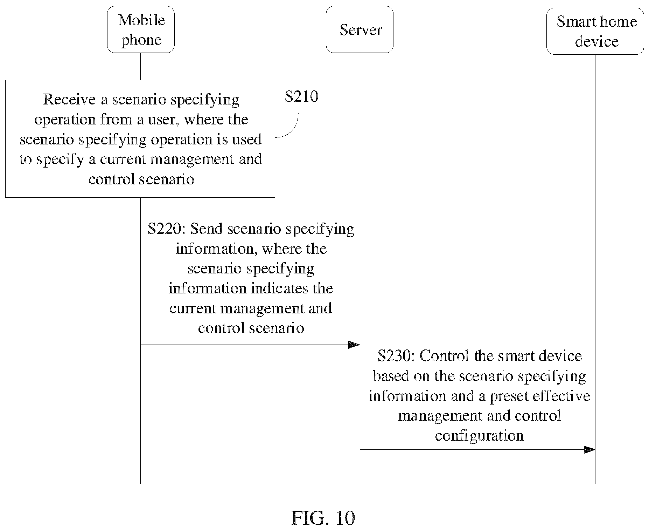

With reference to FIG. 10, the management and control execution phase S200 provided in this embodiment includes the following steps.

S210: The mobile phone 100 receives a scenario specifying operation from a user, where the scenario specifying operation is used to specify a current management and control scenario.

The user may specify the current management and control scenario based on an actual requirement. For example, when a parent takes a rest or goes out and leaves a child or an elderly person at home, a "Child protection scenario" or an "Elderly care scenario" may be specified as the current management and control scenario. When there is a visitor at home, a "Visitor scenario" may be specified as the current management and control scenario.

A specific execution manner of the scenario specifying operation is not limited in embodiments. The following provides several examples.

Example 1: The user may specify the current management and control scenario by using a device management application (for example, "AI Life"). For example, when tapping an ON button 28 in the "Child protection scenario" in the interface shown in FIG. 8D, the user may specify the "Child protection scenario" as the current management and control scenario.

Example 2: The user may specify the current management and control scenario by using a lock screen of the mobile phone 100. According to this example, the user may specify the current management and control scenario without unlocking a screen of the mobile phone 100, so that an operation process is more convenient.

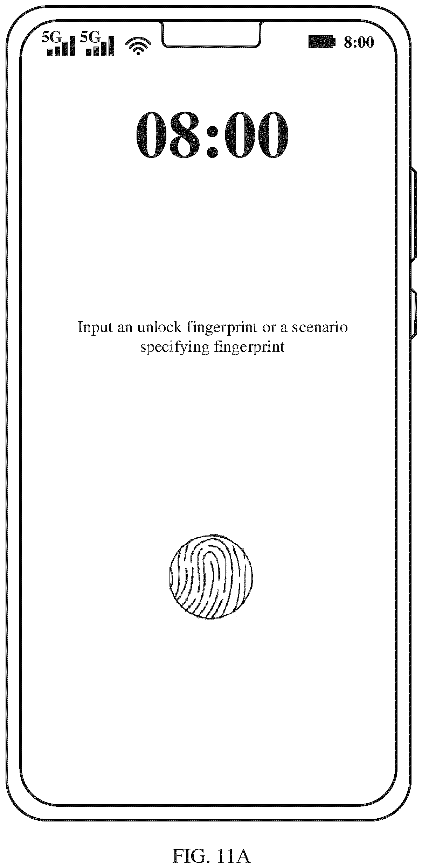

In some embodiments, with reference to FIG. 11A, the user may specify the current management and control scenario by inputting a specific fingerprint on the lock screen of the mobile phone 100. For example, when the user inputs a fingerprint of a left index finger, the current management and control scenario may be specified as the "Child protection scenario"; when the user inputs a fingerprint of a left middle finger, the current management and control scenario may be specified as the "Elderly care scenario"; and when the user inputs a fingerprint of a right thumb, the screen of the mobile phone 100 may be unlocked.

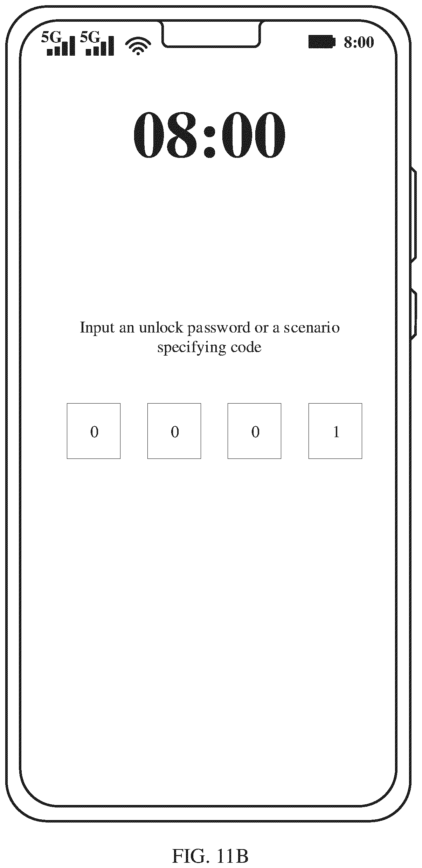

In some other embodiments, with reference to FIG. 11B, the user may specify the current management and control scenario by inputting a specific character on the lock screen of the mobile phone 100. For example, when the user inputs numbers "0001", the current management and control scenario may be specified as the "Child protection scenario"; when the user inputs numbers "0002", the current management and control scenario may be specified as the "Elderly care scenario"; and when the user inputs a screen unlocking password (for example, 1357), the screen of the mobile phone 100 may be unlocked. In another embodiment, a scenario specifying code may alternatively be in a character string form (for example, g6nh) instead of a pure numeric form.

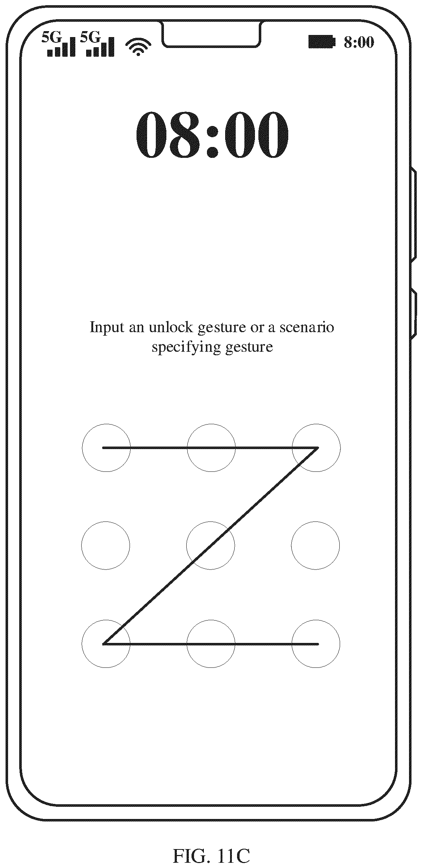

In another embodiment, the user may alternatively specify the current management and control scenario by inputting a specific image, gesture, or the like on the lock screen. For example, when a facial image of a parent user is input on the lock screen of the mobile phone 100, the current management and control scenario is specified as the "Child protection scenario"; or when a specific gesture (for example, a Z-shaped gesture shown in FIG. 11C) is input on the lock screen of the mobile phone 100, the current management and control scenario is specified as the "Elderly care scenario". Details are not described herein again.

In this embodiment, the user specifies the "Child protection scenario" as the current management and control scenario. That is, in the following steps, the "Child protection scenario" is used as an example of the current management and control scenario. However, it may be understood that this application is not limited thereto.

S220: The mobile phone 100 sends scenario specifying information to the server 200, where the scenario specifying information indicates the current management and control scenario.

For example, the scenario indication information carries an identifier of the current management and control scenario, to indicate the current management and control scenario. For example, when the current management and control scenario is the child protection scenario, the scenario specifying information may include an identifier "ChildProtection" of the child protection scenario.

In this embodiment, the user sends the scenario specifying information by using a portable device like the mobile phone 100. In this way, the user may also specify the current management and control scenario even in the outdoors.

S230: The server 200 controls the smart devices based on the scenario specifying information and an effective management and control configuration. The effective management and control configuration is a configuration, for example, a configuration in FIG. 9, preset in the server 200 in the management and control configuration phase S100.

After receiving the scenario specifying information, the server 200 controls the smart devices based on the current management and control scenario, to enable an operating status of a smart device to match a function configuration corresponding to the current management and control scenario.

In other words, by performing the scenario specifying operation on the mobile phone 100, the user may enable all smart devices associated with the current management and control scenario to enter a safety management and control state, so that a safety management and control operation can be performed on the smart devices in batches.

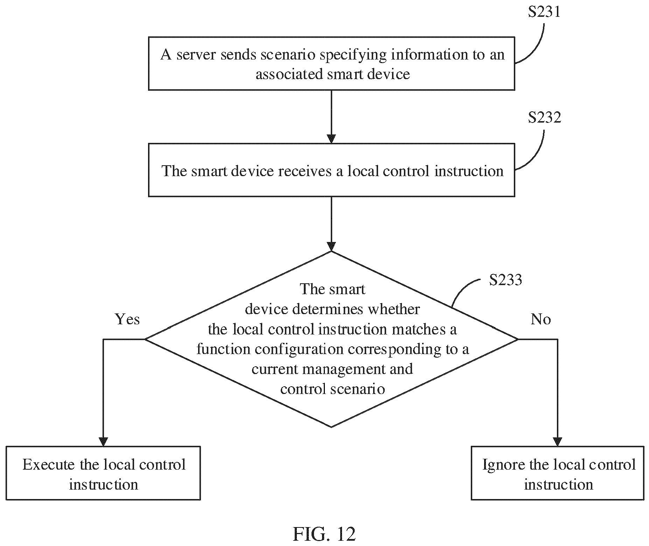

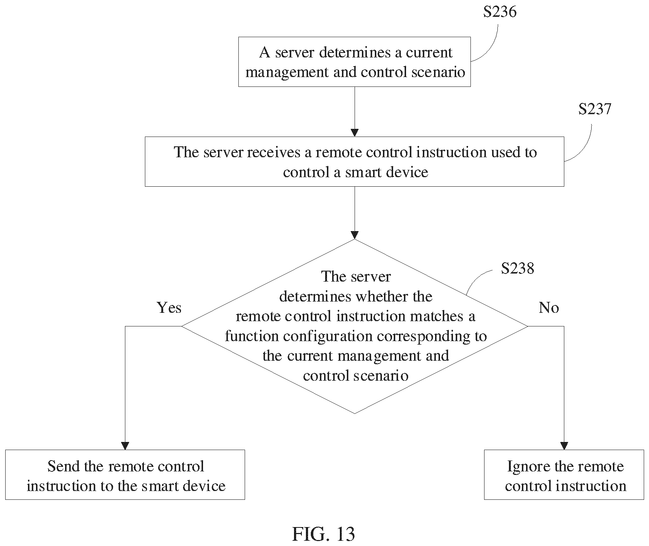

In this embodiment, the server 200 may control the smart devices in two manners shown in FIG. 12 and FIG. 13, which are separately described below.

FIG. 12 shows a manner 1 in which the server 200 controls the smart devices. In the manner 1, the server 200 sends the scenario specifying information to an associated smart device (as an associated IoT device), and then the associated smart device operates based on the function configuration corresponding to the current management and control scenario.

Specifically, with reference to FIG. 12, the manner 1 includes the following steps.

S231: The server 200 sends the scenario specifying information to the associated smart device.

In this embodiment, the server 200 sends the scenario specifying information only to the associated smart device (as the associated IoT device). The associated smart device is a smart device associated with the current management and control scenario. For example, with reference to FIG. 9, when the current management and control scenario is the "Child protection scenario", associated smart devices include an entrance door lock, a children's room door lock, a water heater, a water dispenser, and a fan. In another embodiment, the server 200 may alternatively send the scenario specifying information to all smart devices in the smart home system 10.

After receiving the scenario specifying information, the smart devices determine, based on the scenario indication information, the current management and control scenario from a plurality of management and control scenarios in a preset effective management and control configuration. For example, the smart devices determine, based on the scenario identifier "ChildProtection" in the scenario indication information, the "Child protection scenario" as the current management and control scenario. The preset effective management and control configuration in the smart devices is the effective management and control configuration distributed to the smart devices in step S140.

S232: The associated smart device receives a local control instruction.

The local control instruction is an instruction from user interfaces of the smart devices. As described above, the user interfaces of the smart devices may be operation apparatuses such as operation panels, buttons, knobs, handles, or switches on bodies of the smart devices, or may be remote controls or the like used with the smart devices. Generally, the user interfaces of the smart devices are delivered with the smart devices.

When the user operates the smart devices through the user interfaces of the smart devices, the smart devices may receive the local control instruction. For example, when the user rotates a door handle of the entrance door lock, the entrance door lock receives an "Unlock" instruction; and when the user sets an air volume of the air conditioner by using an air conditioner remote control, the air conditioner receives an air volume adjustment instruction.

S233: The associated smart device determines whether the local control instruction matches the function configuration corresponding to the current management and control scenario. If the local control instruction matches the function configuration corresponding to the current management and control scenario, an action corresponding to the local control instruction is performed, or if the local control instruction does not match the function configuration corresponding to the current management and control scenario, the received local control instruction is ignored.

The "Child protection scenario" is described as an example of the current management and control scenario. With reference to FIG. 9, in an example, when a user (for example, a child user) rotates the door handle to attempt to unlock the entrance door lock, the entrance door lock receives a local control instruction "Unlock". In the child protection scenario, a function configuration associated with the entrance door lock is "Door lock: locked" (that is, the door lock remains in a locked state). The entrance door lock determines that the received local control instruction does not match the function configuration corresponding to the current management and control scenario, and therefore ignores the local control instruction. That is, in the child protection scenario, a child cannot unlock the entrance door lock, so that safety of the child can be ensured.

In another example, when a user (for example, a child user) increases a fan speed by using a knob on a fan, the fan receives a local control instruction. The fan determines, based on a current rotational speed of the fan, whether the local control instruction makes an adjusted rotational speed be greater than a rotational speed (300 r/min) set in a function configuration 13#. If the adjusted rotational speed is greater than 300 r/min, the fan determines that the local control instruction does not match the function configuration corresponding to the current management and control scenario, and therefore ignores the local control instruction; or if the adjusted rotational speed is below 300 r/min, the fan executes the local control instruction (for example, increases the rotational speed to 260 r/min). That is, in the child protection scenario, a child cannot increase the fan speed to a value greater than 300 r/min, so that safety of the child can be ensured.

For example, the smart devices include a management and control SDK. The smart devices are configured to perform the operation in step S233 by using the management and control SDK. When there are numerous brands of smart devices, management and control can be performed on the smart devices by using the method provided in this embodiment provided that the management and control SDK is installed in the smart devices, so that modification of the smart devices can be implemented at extremely low costs.

The following describes a manner 2 in which the server 200 controls the smart devices. In the manner 2, the server 200 receives a remote control instruction used to control a smart device. After receiving the remote control instruction, the server 200 filters the remote control instruction. If the remote control instruction matches the current management and control scenario, the remote control instruction is sent to the smart device; or if the remote control instruction does not match the current management and control scenario, the remote control instruction is ignored.

Specifically, with reference to FIG. 13, the manner 2 includes the following steps.

S236: The server 200 determines, based on the scenario indication information, the current management and control scenario from the plurality of management and control scenarios in the effective management and control configuration. For example, the server 200 determines, based on the scenario identifier "ChildProtection" in the scenario indication information, the "Child protection scenario" as the current management and control scenario.

S237: The server 200 receives a remote control instruction used to control a smart device.

The remote control instruction is an instruction from a remote control apparatus, and the remote control apparatus is, for example, the mobile phone 100, a tablet, or a central control panel 280. Generally, the remote control apparatus and the smart device are products independent of each other. For example, when the user controls the smart device on the mobile phone 100, the mobile phone 100 sends the remote control instruction to the smart device.

Specifically, the remote control apparatus sends the remote control instruction to the smart device by using the server 200. That is, when the user controls the smart device on the remote control apparatus, the remote control apparatus first sends the remote control instruction to the server 200.

S238: The server 200 determines whether the remote control instruction matches the function configuration corresponding to the current management and control scenario. If the remote control instruction matches the function configuration corresponding to the current management and control scenario, the remote control instruction is sent to the smart device, or if the remote control instruction does not match the function configuration corresponding to the current management and control scenario, the received remote control instruction is ignored.

A method in which "The server 200 determines whether the remote control instruction matches the function configuration corresponding to the current management and control scenario" is essentially the same as the method in which "The smart device determines whether the local control instruction matches the function configuration corresponding to the current management and control scenario" in step S233. Details are not described again.

The "Child protection scenario" is still described as an example of the current management and control scenario. For example, when the remote control instruction is to unlock the entrance door lock, the server 200 determines that the remote control instruction does not match the function configuration corresponding to the current management and control scenario, and therefore ignores the remote control instruction.

For another example, when the remote control instruction is to increase the fan speed, if the server 200 determines that the remote control instruction makes the fan speed exceed 300 r/min, the server 200 determines that the remote control instruction does not match the function configuration corresponding to the current management and control scenario, and therefore ignores the remote control instruction; or if the server 200 determines that the remote control instruction does not make the fan speed exceed 300 r/min, the server 200 determines that the remote control instruction matches the function configuration corresponding to the current management and control scenario, and therefore sends the remote control instruction to the fan. When receiving the remote control instruction, the fan executes the remote control instruction (for example, increases the rotational speed to 260 r/min).

In other words, in Example 2, the server 200 filters the remote control instruction. In this way, all instructions sent by the server 200 to the smart device are instructions that match the current management and control scenario, to ensure user safety. For example, when a user (for example, a child user) accidentally touches the central control panel 280, the smart device does not perform an operation opposite to the current management and control scenario.

It should be noted that the manner 1 and the manner 2 above may be performed synchronously. That is, the server 200 may manage and control the smart devices in both the manner 1 and the manner 2 simultaneously.

In addition, the user may further perform a scenario cancellation operation on the mobile phone 100, to enable a smart device to exit the management and control state. For example, when the user taps an "OFF" button 29 on the interface shown in FIG. 8D, the mobile phone 100 sends a scenario cancellation instruction to the server 200. After receiving the scenario cancellation instruction, the server 200 controls the smart device to exit the current management and control scenario (for example, notifies the smart device of the scenario cancellation instruction), to enable the smart device to be restored to a normal operating status. For example, the door lock can be unlocked properly, and the fan speed can be increased to 300 r/min or higher. That is, in this embodiment, the user may operate the mobile phone 100 to exit safety management and control on all smart devices in a house in a one-click manner, and the operation is very convenient.

Moreover, in addition to the manner shown in FIG. 8D, the user may alternatively perform the scenario cancellation operation in another manner. For example, the scenario cancellation operation is performed by inputting a specific fingerprint, character, gesture, image, or the like on the lock screen of the mobile phone 100, so that the operation process is more convenient.

In conclusion, this embodiment provides an IoT device control method. After performing the scenario specifying operation on the terminal-side device (for example, the mobile phone 100), the user may enable all IoT devices (for example, associated smart devices) associated with the current scenario to enter the management and control state. In other words, in this embodiment, for various types of smart devices, safety management and control on all associated IoT devices (for example, all associated smart devices in a whole house) may be started by one click. Compared with the manner in FIG. 2, operation convenience and operation consistency can be significantly improved.

In addition, this embodiment is applicable to a parental control mode. For example, after a parent specifies the current management and control scenario on the terminal-side device, it is difficult for a child, an elderly person, or the like to crack the management and control state of the smart devices, to ensure the user safety.

In addition, this embodiment supports management and control in a multi-scenario mode. The user may specify different scenarios as the current management and control scenario based on a requirement, to perform safety management and control on different IoT devices.

In addition, in this embodiment, the user may further remotely manage and control an IoT device. For example, when going out with the terminal-side device, the user may enable the IoT device to enter the management and control state by using the scenario specifying operation on the terminal-side device.

In addition, in this embodiment, when a new IoT device joins the IoT system, the new IoT device automatically reports function information to the control-side device. In this way, the control-side device may automatically add the IoT device to the effective management and control configuration, to include the IoT device in the management and control range. That is, in this embodiment, when there is a new device in the IoT system, the user does not need to additionally configure a management and control measure for the new device, so that a user operation can be simplified.

In addition, in this embodiment, for an IoT device that does not have a management and control measure (for example, a child lock), safety management and control can be performed by using the control method provided in this embodiment provided that a management and control SDK is installed in the IoT device. That is, in this embodiment, safety protection for special groups such as an elderly person and a child may be implemented at near zero cost.

It should be noted that this embodiment is merely an example for description of the technical solutions of this application, and a person skilled in the art may make other variations.

For example, in this embodiment, the control-side device is the server 200. However, this application is not limited thereto. In another embodiment, the control-side device may alternatively be a central device in a local area network to which the smart home belongs, for example, the home gateway 260 or a smart box. In this embodiment, in the management and control configuration phase, the central device determines the effective management and control configuration (for example, determines the effective management and control configuration according to the method shown in steps S110 to S130), and distributes the effective management and control configuration to each smart device. In the management and control execution phase, the central device performs safety management and control on each smart device based on the scenario specifying information from the mobile phone 100. In this embodiment, the smart home system 10 may implement safety management and control on the whole-house smart home without being connected to the cloud server 200 (for example, smart home cloud).

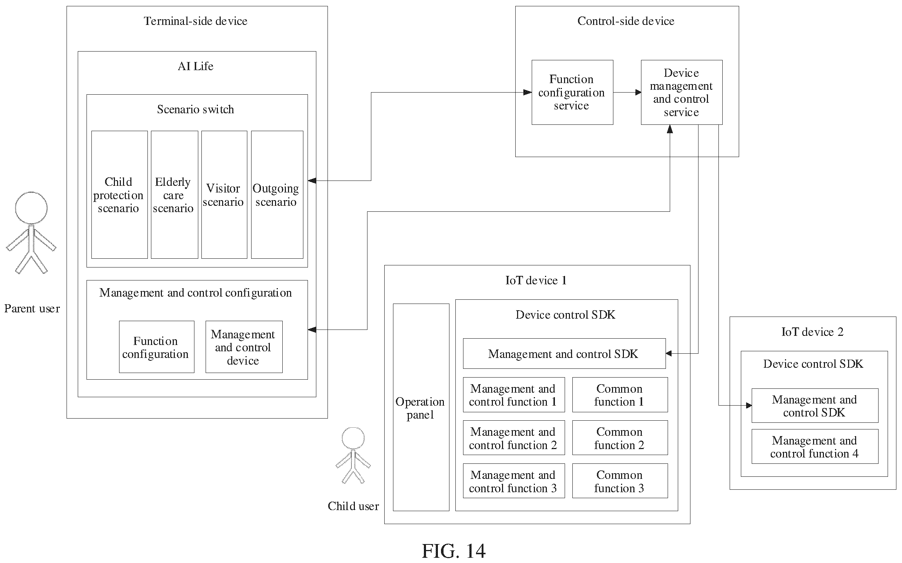

The following describes, with reference to FIG. 14, a terminal-side device, a control-side device, and IoT devices according to an embodiment of this application. With reference to FIG. 14, the terminal-side device (for example, a mobile phone 100) includes an "AI Life" app (used as an example of a device management application). The "AI Life" app includes a scenario switch for each management and control scenario. A parent user may tap the scenario to turn on or off the management and control scenario. The "AI Life" app also includes a management and control configuration editing interface. A "Function configuration" option is used to edit a correspondence between a management and control scenario and a function configuration, and a "Management and control device" option is used to edit an association relationship between a function configuration and a smart device.

The control-side device (for example, IoT home cloud) includes a function configuration service and a device management service. The function configuration service is used to determine an effective management and control configuration, for example, perform the step performed by the server 200 in the management and control configuration phase S 100. The device management and control service is used to manage and control the IoT devices, for example, perform the step performed by the server 200 in the management and control execution phase S200.

The IoT devices include an IoT device 1 and an IoT device 2. Each IoT device has one or more functions. For example, the IoT device 1 includes management and control functions 1 to 3 (functions in the effective management and control configuration) and common functions 1 to 3 (functions not in the effective management and control configuration). Each IoT device further includes a management and control SDK. The SDK may control a function of an IoT device in a current management and control scenario, for example, perform step S233 in the foregoing description. In this way, when a user (for example, a child user) performs, by using a user interface (for example, an operation panel) of the IoT device, an operation that does not match the current management and control scenario, the management and control SDK may control the IoT device to ignore the user operation, to protect user safety.

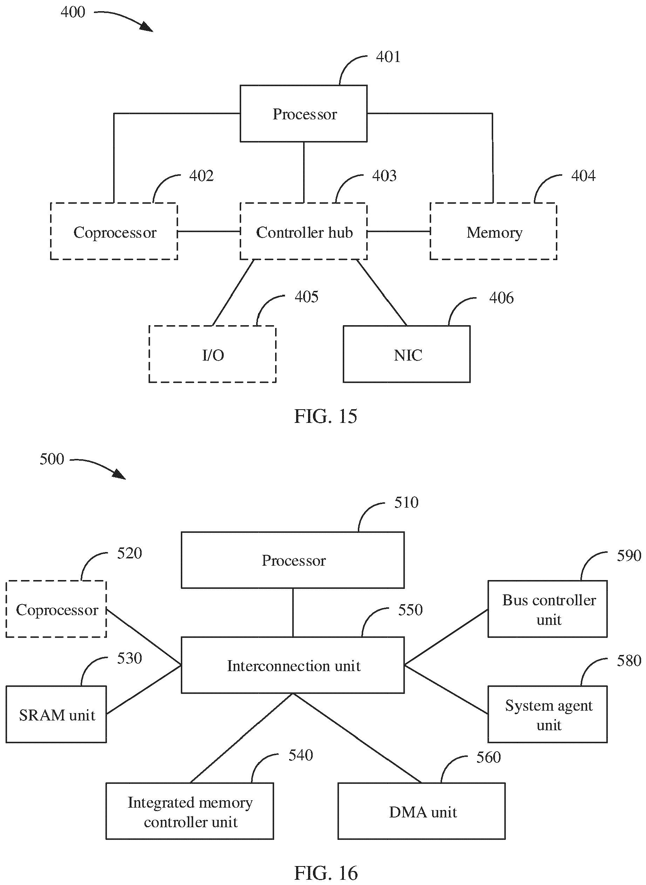

FIG. 15 shows a block diagram of an electronic device 400 according to an embodiment of this application. The electronic device 400 may include one or more processors 401 coupled to a controller hub 403. For at least one embodiment, the controller hub 403 communicates with the processor 401 through a multi-branch bus like a front side bus (Front Side Bus, FSB), a point-to-point interface like a QuickPath interconnect (QuickPath Interconnect, QPI) interface, or a similar connection 406. The processor 401 executes instructions for controlling a general type of data processing operations. In an embodiment, the controller hub 403 includes, but is not limited to, a graphics and memory controller hub (Graphics & Memory Controller Hub, GMCH) (not shown) and an input output hub (Input Output Hub, IOH) (which may be on separate chips) (not shown). The GMCH includes a memory controller and a graphics controller and is coupled to the IOH.

The electronic device 400 may further include a coprocessor 402 and a memory 404 that are coupled to the controller hub 403. Alternatively, one or both of the memory and the GMCH may be integrated into the processor (as described in this application). The memory 404 and the coprocessor 402 are directly coupled to the processor 401 and the controller hub 403. The controller hub 403 and the IOH are located in a single chip.

The memory 404 may be, for example, a dynamic random access memory (DRAM, Dynamic Random Access Memory), a phase change memory (PCM, Phase Change Memory), or a combination thereof. The memory 404 may include one or more tangible and non-transitory computer-readable media that are configured to store data and/or instructions. The computer-readable storage medium stores instructions, and specifically, stores temporary and permanent copies of the instructions.

The electronic device 400 shown in FIG. 15 may be implemented as a terminal-side device, a control-side device, or an IoT device. When the electronic device 400 is implemented as a terminal-side device, the instructions stored in the memory 404 may include instructions that enable, when executed by at least one of the processors, the terminal-side device to implement the steps implemented by the mobile phone in the methods shown in FIG. 4, FIG. 5, FIG. 10, FIG. 12, and FIG. 13.

When the electronic device 400 is implemented as a control-side device, the instructions stored in the memory 404 may include instructions that enable, when executed by at least one of the processors, the control-side device to implement the steps implemented by the server in the methods shown in FIG. 4, FIG. 5, FIG. 10, FIG. 12, and FIG. 13.

When the electronic device 400 is implemented as an IoT device, the instructions stored in the memory 404 may include instructions that enable, when executed by at least one of the processors, the IoT device to implement the steps implemented by the smart home device in the methods shown in FIG. 4, FIG. 5, FIG. 10, FIG. 12, and FIG. 13.

In an embodiment, the coprocessor 402 is a dedicated processor, for example, a high-throughput many integrated core (Many Integrated Core, MIC) processor, a network or communication processor, a compression engine, a graphics processing unit, general-purpose computing on graphics processing units (General-purpose computing on graphics processing units, GPGPU), or an embedded processor. An optional property of the coprocessor 402 is shown in FIG. 15 in dashed lines.

In an embodiment, the electronic device 400 may further include a network interface (Network Interface Controller, NIC) 406. The network interface 406 may include a transceiver, configured to provide a radio interface for the electronic device 400, to communicate with any another suitable device (like a front-end module or an antenna). In various embodiments, the network interface 406 may be integrated with another component of the electronic device 400. The network interface 406 may implement a function of a communication unit in the foregoing embodiments.

The electronic device 400 may further include an input/output (Input/Output, I/O) device 405. The I/O 405 may include: a user interface designed to enable a user to interact with the electronic device 400; a peripheral component interface designed to enable a peripheral component to interact with the electronic device 400; and/or a sensor designed to determine an environmental condition and/or location information related to the electronic device 400.

It should be noted that FIG. 15 is merely an example. To be specific, although FIG. 15 shows that the electronic device 400 includes a plurality of components such as the processor 401, the controller hub 403, and the memory 404, in actual application, a device using the methods in this application may include only some of the components of the electronic device 400, for example, may only include the processor 401 and the network interface 406. In FIG. 15, properties of the optional components are shown by using dashed lines.

FIG. 16 shows a block diagram of a system on chip (System on Chip, SoC) 500 according to an embodiment of this application. In FIG. 16, similar components have a same reference numeral. In addition, a dashed-line box is an optional feature of a more advanced SoC. In FIG. 16, the SoC 500 includes: an interconnection unit 550 coupled to a processor 510; a system agent unit 580; a bus controller unit 590; an integrated memory controller unit 540; one group of or one or more coprocessors 520, which may include integrated graphics logic, an image processor, an audio processor, and a video processor; a static random access memory (Static Random Access Memory, SRAM) unit 530; and a direct memory access (Direct Memory Access, DMA) unit 560. In an embodiment, the coprocessor 520 includes a dedicated processor, for example, a network or communication processor, a compression engine, general-purpose computing on graphics processing units (General-purpose computing on graphics processing units, GPGPU), a high throughput MIC processor, or an embedded processor.

The static random access memory (SRAM) unit 530 may include one or more tangible and non-transitory computer-readable media that are configured to store data and/or instructions. The computer-readable storage medium stores instructions, and specifically, stores temporary and permanent copies of the instructions.

The SoC shown in FIG. 11 may be disposed in a terminal-side device, a control-side device, or an IoT device. When the SoC is disposed in a terminal-side device, the static random access memory (SRAM) unit 530 stores instructions. The instructions may include instructions that enable, when executed by at least one of the processors, the terminal-side device to implement the steps implemented by the mobile phone in the methods shown in FIG. 4, FIG. 5, FIG. 10, FIG. 12, and FIG. 13.

When the SoC is disposed in a control-side device, the static random access memory (SRAM) unit 530 stores instructions. The instructions may include instructions that enable, when executed by at least one of the processors, the control-side device to implement the steps implemented by the server in the methods shown in FIG. 4, FIG. 5, FIG. 10, FIG. 12, and FIG. 13.

When the SoC is disposed in an IoT device, the static random access memory (SRAM) unit 530 stores instructions. The instructions may include instructions that enable, when executed by at least one of the processors, the IoT device to implement the steps implemented by the smart home device in the methods shown in FIG. 4, FIG. 5, FIG. 10, FIG. 12, and FIG. 13.

The term "and/or" in this specification describes only an association relationship for describing associated objects and indicates that three relationships may exist. For example, A and/or B may indicate the following three cases: Only A exists, both A and B exist, and only B exists.

All method implementations of this application may be implemented by software, a magnetic component, firmware, or the like.

Program code may be used to input instructions, to perform functions described in this specification and generate output information. The output information may be applied to one or more output devices in a known manner. For a purpose of this application, a processing system includes any system that has a processor, for example, a digital signal processor (Digital Signal Processor, DSP), a microcontroller, an application-specific integrated circuit (ASIC), or a microprocessor.

The program code may be implemented in a high-level programming language or an object-oriented programming language, to communicate with the processing system. The program code may alternatively be implemented in an assembly language or a machine language when needed. Actually, the mechanism described in this specification is not limited to a scope of any particular programming language. In any case, the language may be a compiled language or an interpreted language.

One or more aspects of at least one embodiment may be implemented by using representative instructions stored on a computer-readable storage medium. The instructions represent various logic in a processor, and when the instructions are read by a machine, the machine is enabled to manufacture logic for performing the technologies described in this specification. These representations, referred to as an "intellectual property (Intellectual Property, IP) core" may be stored on a tangible computer-readable storage medium and provided to a plurality of customers or production facilities to load into a manufacturing machine that actually manufactures the logic or processor.

In some cases, an instruction converter may be configured to convert instructions from a source instruction set to a target instruction set. For example, the instruction converter may convert, in a transform (for example, static binary transform, or dynamic binary transform including dynamic compilation), morphing, emulation, or another manner, the instructions into one or more other instructions processed by the core. The instruction converter may be implemented by software, hardware, firmware, or a combination thereof. The instruction converter may be located on the processor, outside the processor, or partially on the processor and partially outside the processor.

## Claims

1. An IoT device control method, applied to a system comprising a terminal-side device, a control-side device, and a plurality of IoT devices, wherein the method comprises:
obtaining, by the control-side device, a management and control configuration template and function information of the IoT devices, wherein the management and control configuration template comprises an initial correspondence between at least one management and control scenario and at least one function configuration, and the function configuration comprises a function setting of a managed and controlled function of an IoT device;
determining, by the control-side device, an effective management and control configuration based on the management and control configuration template and the function information, wherein the effective management and control configuration comprises an effective correspondence between a management and control scenario and a function configuration, and an effective association relationship between a function configuration and an IoT device; and
distributing, by the control-side device, the effective management and control configuration to the IoT devices, wherein the effective management and control configuration indicates that in a specified management and control scenario, an operating status of an IoT device matches a function configuration associated with the IoT device.

2. The method according to claim 1, wherein the determining, by the control-side device, an effective management and control configuration based on the management and control configuration template and the function information comprises:
determining, by the control-side device, an initial management and control configuration based on the management and control configuration template and the function information of the IoT devices, wherein the initial management and control configuration comprises the initial correspondence between a management and control scenario and a function configuration, and an initial association relationship between a function configuration and an IoT device;
sending, by the control-side device, the initial management and control configuration to the terminal-side device;
receiving, by the terminal-side device, a user modification operation, and modifying the initial management and control configuration based on the user modification operation, to obtain the effective management and control configuration; and
obtaining, by the control-side device, the effective management and control configuration from the terminal-side device.

3. The method according to claim 2, wherein the user modification operation is used to modify at least one of the following items in the initial management and control configuration: the initial correspondence, the initial association relationship, and the function configuration.

4. The method according to claim 1, wherein the control-side device is a cloud server or a central device in a local area network to which the IoT devices belong.

5. An IoT device control method, applied to a control-side device, wherein the method comprises:
obtaining a management and control configuration template and function information of a plurality of IoT devices, wherein the management and control configuration template comprises an initial correspondence between at least one management and control scenario and at least one function configuration, and the function configuration comprises a function setting of a managed and controlled function of an IoT device;
determining an effective management and control configuration based on the management and control configuration template and the function information, wherein the effective management and control configuration comprises an effective correspondence between a management and control scenario and a function configuration, and an effective association relationship between a function configuration and an IoT device; and
distributing the effective management and control configuration to the IoT devices, wherein the effective management and control configuration indicates that in a specified management and control scenario, an operating status of an IoT device matches a function configuration associated with the IoT device.

6. The method according to claim 5, wherein the determining an effective management and control configuration based on the management and control configuration template and the function information comprises:
determining an initial management and control configuration based on the management and control configuration template and the function information of the IoT devices, wherein the initial management and control configuration comprises the initial correspondence between a management and control scenario and a function configuration, and an initial association relationship between a function configuration and an IoT device;
sending the initial management and control configuration to a terminal-side device; and
receiving the effective management and control configuration from the terminal-side device, wherein the effective management and control configuration is a configuration obtained by modifying at least one of the following items in the initial management and control configuration: the initial correspondence, the initial association relationship, and the function configuration.

7. An IoT device control method, applied to a system comprising a terminal-side device, a control-side device, and a plurality of IoT devices, wherein the method comprises:
receiving, by the terminal-side device, a scenario specifying operation from a user, wherein the scenario specifying operation is used to specify a current management and control scenario;
sending, by the terminal-side device, scenario specifying information to the control-side device, wherein the scenario specifying information indicates the current management and control scenario; and
controlling, by the control-side device, the IoT devices based on the scenario specifying information and a preset effective management and control configuration, wherein the effective management and control configuration comprises an effective correspondence between at least one management and control scenario and at least one function configuration, and an effective association relationship between a function configuration and an IoT device, and the function configuration comprises a function setting of a managed and controlled function of an IoT device.

8. The method according to claim 7, wherein the controlling, by the control-side device, the IoT devices based on the scenario specifying information and a preset effective management and control configuration comprises:
determining, by the control-side device, the current management and control scenario from the at least one management and control scenario based on the scenario specifying information;
receiving, by the control-side device, a remote control instruction used to control an IoT device; and
determining, by the control-side device, whether the remote control instruction matches a function configuration corresponding to the current management and control scenario, and if the remote control instruction matches the function configuration corresponding to the current management and control scenario, sending the remote control instruction to the IoT device, or if the remote control instruction does not match the function configuration corresponding to the current management and control scenario, ignoring the remote control instruction.

9. The method according to claim 7, wherein the effective management and control configuration distributed to the IoT devices is preset in the IoT device; and
the controlling, by the control-side device, the IoT devices based on the scenario specifying information and a preset effective management and control configuration comprises:
sending, by the control-side device, the scenario specifying information to an associated IoT device, wherein the associated IoT device is an IoT device associated with the current management and control scenario; and
operating, by the associated IoT device, based on a function configuration corresponding to the current management and control scenario.

10. The method according to claim 9, wherein the operating, by the associated IoT device, based on a function configuration corresponding to the current management and control scenario comprises:
determining, by the associated IoT device, the current management and control scenario from the at least one management and control scenario based on the scenario indication information;
receiving, by the associated IoT device, a local control instruction used to control an IoT device; and
determining, by the associated IoT device, whether the local control instruction matches the function configuration corresponding to the current management and control scenario, and if the local control instruction matches the function configuration corresponding to the current management and control scenario, performing an action corresponding to the local control instruction, or if the local control instruction does not match the function configuration corresponding to the current management and control scenario, ignoring the local control instruction.

11. The method according to claim 7, wherein the scenario specifying operation is a fingerprint input operation, a gesture input operation, an image input operation, or a character input operation that is performed on a lock screen of the terminal-side device.

12. An IoT device control method, applied to a control-side device, wherein the method comprises:
receiving scenario specifying information from a terminal-side device, wherein the scenario specifying information indicates a current management and control scenario; and
controlling an IoT device based on the scenario specifying information and a preset effective management and control configuration, wherein the effective management and control configuration comprises an effective correspondence between at least one management and control scenario and at least one function configuration, and an effective association relationship between a function configuration and an IoT device, and the function configuration comprises a function setting of a managed and controlled function of an IoT device.

13. The method according to claim 12, wherein the controlling an IoT device based on the scenario specifying information and a preset effective management and control configuration comprises:
determining the current management and control scenario from the at least one management and control scenario based on the scenario specifying information;
receiving a remote control instruction used to control an IoT device; and
determining whether the control instruction matches a function configuration corresponding to the current management and control scenario, and if the control instruction matches the function configuration corresponding to the current management and control scenario, sending the remote control instruction to the IoT device, or if the control instruction does not match the function configuration corresponding to the current management and control scenario, ignoring the remote control instruction.

14. An IoT device control method, applied to an IoT device, wherein an effective management and control configuration distributed to the IoT device is preset in the IoT device; and the effective management and control configuration comprises an effective correspondence between at least one management and control scenario and at least one function configuration, and an effective association relationship between a function configuration and an IoT device, and the function configuration comprises a function setting of a managed and controlled function of an IoT device; and
the method comprises:
receiving scenario specifying information from a control-side device, wherein the scenario specifying information indicates a current management and control scenario;
determining the current management and control scenario from the at least one management and control scenario based on the scenario indication information;
receiving a local control instruction used to control an IoT device; and
determining whether the local control instruction matches a function configuration corresponding to the current management and control scenario, and if the local control instruction matches the function configuration corresponding to the current management and control scenario, performing an action corresponding to the local control instruction, or if the local control instruction does not match the function configuration corresponding to the current management and control scenario, ignoring the local control instruction.

15. A control-side device, comprising:
a memory, configured to store instructions executed by one or more processors of the control-side device; and
a processor, wherein when the processor executes the instructions in the memory, the control-side device is enabled to perform the method according to any one of claims 5, 6, 12, and 13.

16. An IoT device, comprising:
a memory, configured to store instructions executed by one or more processors of the IoT device; and
a processor, wherein when the processor executes the instructions in the memory, the IoT device is enabled to perform the method according to claim 14.

17. An IoT system, comprising a terminal-side device, a control-side device, and a plurality of IoT devices, wherein
the terminal-side device is configured to perform steps performed by the terminal-side device in the method according to any one of claims 1 to 4 and 7 to 11; the control-side device is configured to perform steps performed by the control-side device in the method according to any one of claims 1 to 4 and 7 to 11; and the IoT devices are configured to perform steps performed by the IoT devices in the method according to any one of claims 1 to 4 and 7 to 11.

18. A computer-readable storage medium, wherein the computer-readable storage medium stores instructions, and when the instructions are executed on a computer, the computer is enabled to perform the method according to any one of claims 1 to 14.
